# EUROPÄISCHE PATENTSCHRIFT

(11) **EP 1 115 242 B1**
(45) Veröffentlichungstag und Bekanntmachung des Hinweises auf die Patenterteilung: **11.06.2003**
(21) Anmeldenummer: 00810008.3
(22) Anmeldetag: 06.01.2000
(51) Int. Cl.: H04M 3/38, H04L 29/06, G06F 1/00

(54) **Authentifikation eines Abonnenten eines Telekommunikationsdienstes mittels einer häufig gewählten Zieladresse**
Authentication of a telecommunication service subscriber by means of a frequently dialled address
Authentification d'un abonné d'un service de télécommunication à l'aide d'une adresse souvent composée

(43) Veröffentlichungstag der Anmeldung: 11.07.2001
(73) Patentinhaber: Swisscom AG, 3000 Bern 29 (CH)
(72) Erfinder: Eberhardt, Rolf, 3075 Rüfenacht (CH); Lehmann, Lorenz, 3122 Kehrsatz (CH)
(74) Vertreter: BOVARD AG - Patentanwälte

(56) Entgegenhaltungen:
- EP-A- 0 756 410
- US-A- 5 633 914
- US-A- 5 774 525

## Beschreibung

Die vorliegende Erfindung beschreibt ein Verfahren zur Authentifikation von Abonnenten von Telekommunikationsdiensten. Die Erfindung betrifft insbesondere die Authentifikation von Telefonnetz- und IP-Netzbenutzern, welche von Intemetdiensten und/oder Telekommunikationsdiensten Gebrauch machen.

Eine grosse Bandbreite von verschiedenen Kundendiensten wird heute über Telekommunikationsnetze, insbesondere das Internet, das öffentliche geschaltete Telefonnetz und/oder Mobilfunknetze, angeboten. Beispiele dafür sind das Bestellen von Waren übers Internet, das elektronische Bezahlen von Waren oder das Abfragen von Datenbanken (Kontostand, Börsenkurse etc.), beispielsweise via SMS (Short Message Services), IVR (Interactive Voice Response) oder Web-Interface. Durch diese Entwicklung entsteht ein wachsendes Bedürfnis von Seiten der Anbieter und Kunden nach möglichst grosser Sicherheit bezüglich Authentizität, das heisst der gesicherten Identität des Kunden, welcher den Service in Anspruch nimmt. Bei der Authentifikation werden häufig Personal Identification Numbers (PIN) und/oder sogenannte Smartcards verwendet. Smartcards setzen jedoch ein Kartenlesegerät voraus. In beiden Fällen wird der Name oder eine andere Identifikation des Kunden sowie die PIN zum Remote-Server des Dienst- oder Produkteanbieters übermittelt. Ein Authentifikationssystem entschlüsselt (falls notwendig) und überprüft die PIN über eine entsprechende Datenbank und authentifiziert den Kunden. Kreditkarten bilden eine Ausnahme. Benutzt der Kunde seine Kreditkarte an einer Cash-Station, gibt er seine PIN ein. Typischerweise enthält der Magnetstreifen der Kreditkarte die Kontonummer und die verschlüsselte PIN des autorisierten Inhabers, die Entschlüsselung erfolgt jedoch im Kartenlesegerät selbst. Da der Magnetstreifen die PIN enthält und der Besitzer eines Kartenlesegeräts und des entsprechenden Dekodiergerätes über die Möglichkeit verfügt, die PIN zu entschlüsseln, bietet die Eingabe einer PIN bei Kreditkarten nicht notwendigerweise einen effektiven Schutz. Smartcards versuchen dieses Problem durch eine zusätzliche Verschlüsselung der PIN zu lösen. Dies geschieht entweder durch einen dynamischen Zahlenschlüssel, welcher z.B. Zeit, Tag oder Monat enthält oder einen anderen Algorithmus. Die Entschlüsselung und Authentifikation geschieht aber nicht im Gerät selbst, sondern extern über ein Authentifikationssystem. Dies ergibt eine zusätzliche Sicherheit. Im Stand der Technik sind weiter die folgenden Patentschriften zu erwähnen. Die Patentanmeldung EP 0756410 beschreibt ein Verfahren zur Authentisierung von Benutzern. Bei dem Verfahren sind in einer Datenbank eine benutzerspezifisch vorgängig festgelegte Abfragemenge und eine Menge mit dazugehörigen Antworten abgespeichert. Bei der Authentisierung werden aus der Abfragemenge zufallsgesteuert eine oder mehrere Abfragen ausgewählt und dem Benutzer übermittelt. Bei richtigen Antworten wird der Zugang zu dem betreffenden Dienst freigegeben und der Benutzer ist authentifiziert. Gemäss US-Patentschrift US 5774525 werden ebenfalls Informationen einem Benutzer zugeordnet in einer Datenbank abgespeichert. Bei der Authentisierung werden dem Benutzer Fragen zur abgespeicherten Information gestellt. Stimmen die Antworten mit der abgespeicherten Information überein, wird der Benutzer authentisiert. Als letztes sei die Patentschrift US 5633914 erwähnt. US 5633914 beschreibt ein Authentisierungsverfahren, in welchem eine Telefonnummer, die von der Anschlussnummer des Abonnenten verschieden ist, in einer Datenbank dem Abonnenten zugeordnet abgespeichert wird. Welche Telefonnummer zur Authentifizierung des Abonnenten vom System benutzt werden soll, wird vom Abonnenten dem Provider bekannt gegeben. Vorteilhafterweise soll in dem Verfahren z.B. die Telefonnummer eines Freundes oder Bekannten etc. benutzt werden, an welche sich der Abonnent leicht erinnert.

Es ist eine Aufgabe der Erfindung, ein neues Verfahren und System zur Authentifikation eines Abonnenten eines Telekommunikationsnetzes, insbesondere des öffentlich geschalteten Telefonnetzes, eines ISDN-Netzes, eines Mobilfunknetzes und/oder eines IP-Netzes, vorzuschlagen, welche beispielsweise ermöglichen, den Abonnenten bei der Verwendung von Telekommunikationsdiensten zu authentifizieren, ohne dabei Smartcards und dafür erforderliche Kartenlesegeräte oder PINs zu verwenden.

Gemäss der vorliegenden Erfindung wird dieses Ziel insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zur Authentifikation eines Abonnenten eines Telekommunikationsnetzes in einer Datenbank eines Authentifikationssystems basierend auf dem Telefonverkehr des Abonnenten über eine Abonnentenadresse des Telekommunikationsnetzes häufig gewählte Zieladressen der Abonnentenadresse zugeordnet abgespeichert werden, dass der Abonnent mindestens eine der über die Abonnentenadresse häufig gewählten Zieladresse einem Servermodul des Authentifikationssystems angibt, dass eine Authentifizierungseinheit des Authentifikationssystems die angegebene Zieladresse mit häufig gewählten Zieladressen vergleicht, die der Abonnentenadresse zugeordnet abgespeichert sind, und dass, falls die angegebene Zieladresse sich unter den abgespeicherten, häufig gewählten Zieladressen befindet, der Abonnent durch das Authentifikationssystem authentifiziert wird. Als Ausführungsvarianten kann der Abonnent insbesondere ein Abonnent eines Telefonnetzes oder der Benutzer eines IP-Netzes sein. Die Abonnentenadresse kann beispielsweise eine Anschlussnummer eines Telefonnetzes oder eine IP-Nummer eines IP-Netzes sein und die häufig gewählten Zieladressen entsprechend häufig gewählte Telefonnummern oder IP-Nummern. Bei IP-Netzen können statt den IP-Nummern auch die URL (Universal Resource Locator) für die Zieladressen und/oder Abonnentenadressen zur Authentifizierung verwendet werden. Beim Abonnenten kann es sich typischerweise um einen Benutzer von Telekommunikationsdiensten, wie Internetshopping, elektronische Zahlungsverfahren oder Telebanking, handeln, welcher über eine Abonnentenadresse in einem Telekommunikationsnetz verfügt. Das Telekommunikationsnetz kann wie oben beschrieben, insbesondere ein öffentlich geschaltetes Telefonnetz, ein ISDN-Netz, ein Mobilfunknetz und/oder ein IP-Netz sein. Dabei ist die Schnittstelle zum Abonnenten beispielsweise eine graphische Schnittstelle GUI, wie bei Web-Interfaces, oder eine Interactive Voice Responce IVR-Schnittstelle. Es ist darauf hinzuweisen, dass die Verbindung vom Abonnenten zum Authentifikationssystem zumindest zum Teil über ein Mobilfunknetz, z.B. ein GSM- oder UMTS-Netz, und/oder ein oder mehrere Festnetze, insbesondere das Internet und das öffentliche Telefonnetz, erfolgen kann. Zur Übermittlung bei Mobilfunknetzen können verschiedene Übermittlungsstandards wie SMS (Short Message System) oder USSD (Unstructured Supplementary Service Data) verwendet werden. Dazu gehört auch WAP (Wireless Application Protocoll) zum Benutzen von Web-Diensten übers Mobilfunknetz oder GPRS (Generalized Packet Radio Service). Um den Sicherheitsstandard bei der Übermittlung zu erhöhen, kann die ausgetauschte Information zusätzlich verschlüsselt werden durch feste, dynamische, symmetrische, asymmetrische oder andere Verschlüsselungsalgorithmen. Die Erfindung kann auch als zusätzliches Authentifikationssystem oder Ergänzung zu anderen Authentifikationssystemen dienen, z.B. als zusätzliche Sicherheitsprüfung bevor einem Kunden eine PIN generiert wird. Die Anwendung des Authentifikationsverfahrens und -systems ist nicht auf Telekommunikationsdienste beschränkt.

Die Information zur Authentifikation des Abonnenten (z.B. des Internet-Kunden) sollte für Dritte nicht leicht zu fälschen sein, so dass der Anbieter eines Dienstes sicher sein kann, mit der tatsächlich autorisierten Person verbunden zu sein. Einer der Vorteile der Erfindung ist, dass z.B. bei Telefonnetzen die durch den Abonnenten unter einem bestimmten Telefonanschluss gewählten Telefonnummern eine solche geeignete Information darstellen, da es u.a. durch die hohe Sicherheit in Telefonnetzen möglichen Betrügern schwierig gemacht ist, den Telefonverkehr eines Kunden zu kontrollieren. Die Einfachheit des Authentifikationsverfahrens und -Systems für den Abonnenten ist ein weiterer Vorteil der Erfindung. So werden zur Identifizierung weder feste PINs oder Passwörter, noch Smartcards oder SIM-Karten (Subscriber Identity Module) verwendet, mit ihren eingangs besprochenen Nachteilen bezüglich Hardwareanforderungen (z.B. ein Kartenlesegerät für Smartcards), Sicherheit, Komplexität des Verfahrens, Handhabung durch den Benutzer (z.B. muss sich der Abonnent weder ein PIN noch ein Passwort merken) und/oder Kosten. In vielen Fällen ist eine aufwendigere Identifizierung beispielsweise eines Benutzers eines Telekommunikationsdienstes, z.B. über eine eindeutige Identifikationsnummer wie Prozessornummer, Gerätenummer, IMSI (International Mobile Subscriber Identification) oder MSISDN (Mobile Subscriber ISDN) Nummern, nicht unbedingt notwendig und/oder unter der Berücksichtigung der genannten Aspekte (z.B. Komplexität, Kosten, Handhabung) wenig sinnvoll. Der Sicherheitsstandard der vorliegenden Erfindung reicht für viele Anwendungen häufig aus. Eine weitere Verwendungsmöglichkeit der Erfindung liegt nicht nur in der einzel oder kombinierten Anwendung, sondern auch im abgestuften Anwenden des Authentifikationsverfahren mit herkömmlichen Verfahren. So könnte beispielsweise bis zu einem bestimmten, vordefinierten Geldbetrag, z.B. bei Internet-Diensten, das Authentifikationsverfahren dieser Erfindung zur Anwendung kommen, während beim Überschreiten dieses Betrages auf ein anderes Authentifikationsverfahren mit höherem Sicherheitsstandard umgestellt wird.

In einer Ausführungsvariante umfasst das Authentifikationssystem eine IVR-Schnittstelle, über welche der Abonnent aufgefordert wird, eine häufig gewählte Telefonnummer anzugeben. Einer der Vorteile dieser Ausführungsvariante ist, dass der Abonnent ausser den Eingabeelementen des Telefongeräts keine weitere Hardware für die Authentifikation benötigt.

In einer Ausführungsvariante umfasst das Authentifikationssystem ein Web-Interface des Internets, über welches der Abonnent aufgefordert wird, eine häufig gewählte Zieladresse anzugeben. Insbesondere liegen die Vorteile dieser Ausführungsvariante im graphischen, einfachen Erfassen und Bedienen der Schnittstelle durch den Benutzer.

In einer weiteren Ausführungsvariante findet die Authentifikation des Abonnenten dadurch statt, dass das Authentifikationssystem eine Liste mit mindestens einer der gespeicherten, häufig gewählten Zieladressen und mit mindestens einer beliebigen anderen Zieladresse generiert, und dass der Abonnent aus dieser Liste eine Zieladresse als häufig gewählte Zieladresse angibt. Diese Ausführungsvariante hat den Vorteil, dass, sollte sich der Abonnent nicht an eine häufig benutzte Zieladresse erinnern, ihm damit eine häufig gewählte Zieladresse zur Auswahl gegeben werden kann. Zum Beispiel ist die Aufschlüsselung der Anschlussnummer nach häufig gebrauchten Telefonnummern bei der monatlichen Gebührenrechnung für Telefonanschlüsse heute bereits gebräuchlich. Ein anderer Vorteil ist, dass die Auswahl der Zieladresse einfach und ohne manuelle Dateneingabe erfolgen kann. Dies kann insbesondere Vorteile haben bei Palmtop-Geräten oder Touch-Screens, welche beispielsweise aus hygienischen, technischen oder Kostengründen nur über eine einfache graphische Eingabe ohne Tastatur verfügen.

In einer weiteren Ausführungsvariante findet die Authentifikation des Abonnenten dadurch statt, dass der Abonnent seine Angaben mittels gesprochener Sprache über ein Kommunikationsendgerät eingibt. Die Schnittstelle zum Authentifikationssystem kann insbesondere ein Spracherkennungsmodul umfassen. Einer der Vorteile dieser Ausführungsvariante ist, dass die Authentifikation für den Abonnenten sehr einfach ist, minimale Kenntnisse der Benutzerschnittstelle voraussetzt und keine weiteren Eingabegeräte benötigt.

Es ist anzufügen, dass bei allen Ausführungsvarianten der Anbieter dem Abonnenten bei der Authentifikation optional, z.B. zum Vereinfachen des Authentifikationverfahrens, eine mögliche Abonnentenadresse, also z.B. eine Anschlussnummer eines Telefonnetzes oder eine IP-Adresse, vorschlagen kann oder z.B. mittels Anschluss- oder Netzwerkadressenerkennung die Abonnentenadresse fest vorgibt. Die Wahl der Ausführungsvariante kann insbesondere vom gewünschten Sicherheitsstandard oder der gewählten Benutzerschnittstelle abhängen. Ideale Anwendungsgebiete können beispielsweise, neben der Authentifikation beim Benutzen von Internet- und Onlinediensten, auch die Authentifikation bei Diensten sein, welche Waren über die Telefonrechnung abrechnen oder bei Diensten, für welche es schwierig ist, eine physikalische Adresse des Benutzers nachzuweisen.

Bei allen Ausführungsvarianten ist es als weitere Variante möglich, den Sicherheitsstandard des Authentifikationsverfahrens zu erhöhen, indem vom Servermodul oder vom Abonnenten zusätzlich ein Zeitintervall angegeben wird, in welchem unter einer Abonnentenadresse eine Zieladresse häufig gewählt wurde. Der Sicherheitsstandard ist dann insbesondere abhängig von der Grösse des gewählten Zeitintervals.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegte Figuren illustriert:
Figur 1 zeigt ein Blockdiagramm, welches den möglichen Aufbau einer Authentifizierungseinheit und einen Abonnenten eines Telekommunikationsnetzes darstellt,
Figur 2 zeigt ein Flussdiagramm, welches eine mögliche Realisierung einer ersten Ausführungsvariante mit Abonnentenadresse und einer häufig gebrauchten Zieladresse als Erkennung beschreibt,
Figur 3 zeigt ein Flussdiagramm, welches eine mögliche Realisierung einer zweiten Ausführungsvariante mit einer Auswahlliste von mindestens einer beliebigen Zieladresse und mindestens einer häufig gebrauchten Zieladresse einer Abonnentenadresse beschreibt.

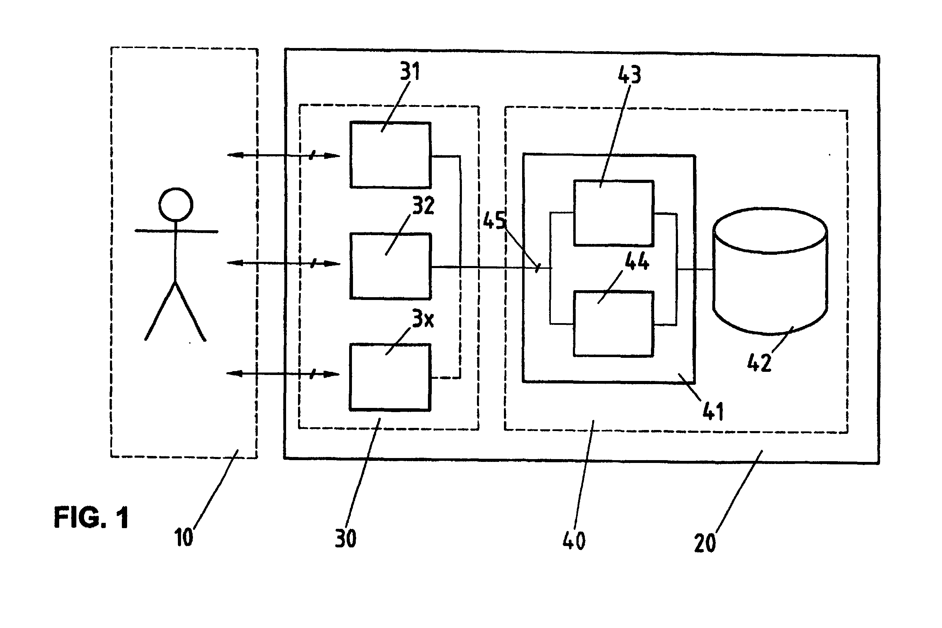

Figur 1 illustriert eine Architektur, die zur Realisierung der Erfindung verwendet werden kann. Im diesem Ausführungsbeispiel enthält das Authentifikationssystem 20 ein Servermodul 30 und eine Authentifizierungseinheit 40. Der Abonnent 10 greift über eine Benutzerschnittstelle auf das Servermodul 30 zu. Das Servermodul 30 umfasst die Schnittstelle zum Abonnenten 10 und gegebenfalls auch einen angebotenen Dienst, z.B. durch den Internetprovider. Das Servermodul 30 kann beispielsweise einen Web-Server 31, einen IVR-Server 32 und/oder einen anderen Remote-Server 3x enthalten. Das Servermodul 30 nimmt die Authentifikation des Kunden über eine Authentifizierungseinheit 40 vor, wobei die Authentifizierungseinheit 40 in diesem Fall eine Schnittstelle 45, ein Betriebsmodul 41 und eine Datenbank 42 umfasst. Die Authentifizierungseinheit 40 kann insbesondere durch einen Operator einer Telekommunikationsgesellschaft extern unterhalten werden. Über die Schnittstelle 45, beispielsweise ein API (Application Programming Interface), kann das Servermodul 30 auf die Datenbank 42 und ihre Datensätze zugreifen. Die Datenbank 42 enthält Datensätze mit den Abonnentenadressen und den zugeordneten, häufig gewählten Zieladressen. Das Betriebsmodul 41 besteht aus 2 Modulen, einem Abonnentenadressenmodul 43 und einem Auswahllistenmodul 44. Das Benutzernummermodul 43 stellt eine API-Funktion zur Verfügung, welche auf Eingabe eines Datensatzes "Abonnentenadresse/häufig gewählte Zieladresse" für diese Abonnentenadresse die Datenbank 42 nach einem solchen Datensatz durchsucht und als Antwort zurückgibt, ob der Datensatz gefunden wurde oder nicht. Die API-Funktion kann beispielsweise ein prozeduraler Aufruf der Form FUN.validate(Abonnentenadresse: string; häufig_gebrauchte_Zieladresse: string):boolean sein (FUN: Frequently Used Numbers). Das Auswahllistenmodul 44 stellt eine API-Funktion zur Verfügung, welche auf Eingabe einer Abonnentenadresse eine Liste mit mindestens einer beliebigen Zieladresse und mindestens einer häufig gewählten Zieladresse, welche der Abonnentenadresse zugeordnet ist, generiert. Die API-Funktion kann beispielsweise ein prozeduraler Aufruf der Form FUN.sample(Abonnentenadresse:string; VAR häufig_gebrauchte_Zieladresse: string) sein. Nimmt das Servermodul 30 eine Authentifikation eines Abonnenten vor, fordert es den Abonnenten auf, eine Abonnentenadresse sowie eine häufig gewählte Zieladresse einzugeben. Darauf greift das Servermodul 30 über eine API-Funktion auf das Betriebsmodul 41 und das Abonnentenadressenmodul 43 zu, welche die Datensätze nach der Kombination "Abonnentenadresse/häufig gebrauchte Zieladresse" durchsucht und den Abonnenten authentifiziert, falls der Datensatz in der Datenbank 42 vorhanden ist. War die Authentifikation erfolgreich, kann das Servermodul 30, also z.B. der Provider, dem Abonnenten 10 gegebenenfalls den Zugriff auf den Dienst freigeben. Alternativ hat das Servermodul 30 die Möglichkeit, vom Abonnenten 10 nur die Eingabe einer Abonnentenadresse zu fordern. Das Servermodul 30 greift darauf über eine API-Funktion auf das Betriebsmodul 41 und das Auswahllistenmodul 44 zu, welches ihm eine Liste mit mehreren beliebigen Zieladressen und mindestens einer häufig gewählten Zieladresse generiert. Das Servermodul 30 fordert den Abonnenten 10 auf, aus dieser Liste die häufig gewählte Zieladresse auszuwählen und überprüft mittels des Abonnentenadressenmoduls 43 die Authentizität des Abonnenten 10 wie in der vorhergehenden Variante.

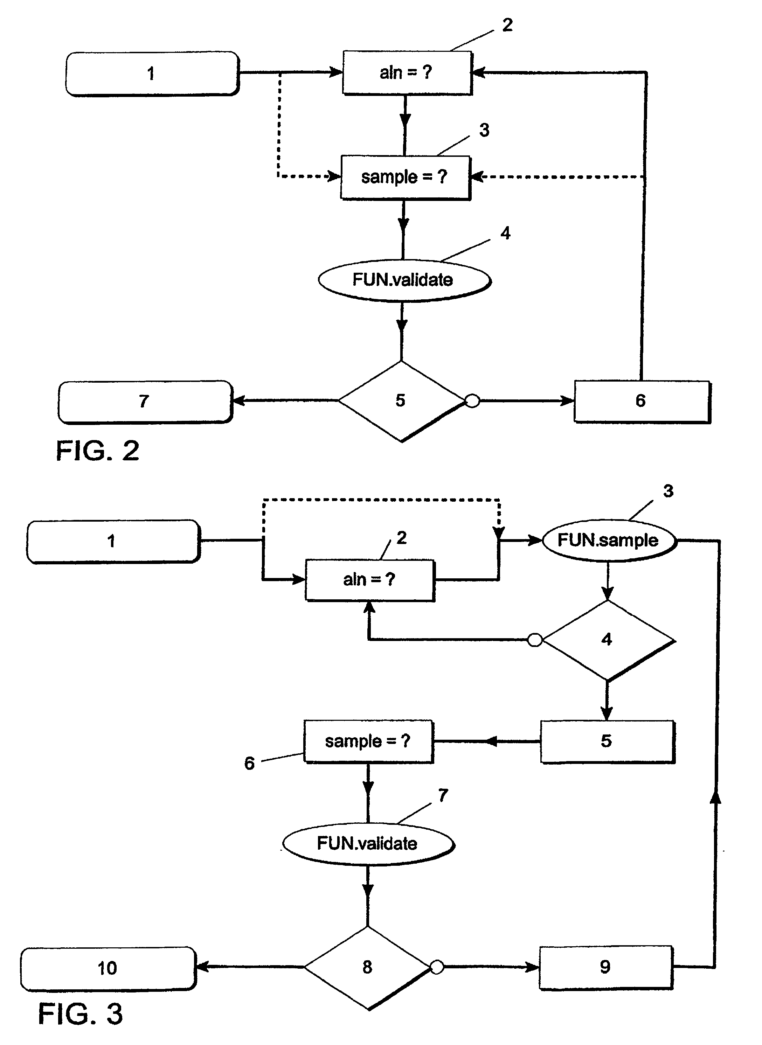

Figur 2 illustriert mittels eines Flussdiagramms ein erstes Ausführungsbeispiel, bei welchem das Abonnentenadressenmodul 43 (Figur 1) verwendet wird. Es ist für den Zugriff übers Telefon (z.B. IVR, SMS) oder einem Web-Interface geeignet, kann aber allgemein verwendet werden. Ein Abonnent 10 möchte z.B. einen bestimmten Dienst in Anspruch nehmen. Er beginnt deshalb mit Schritt 1 eine Serveranfrage bei dem Anbieter dieses Dienstes. In Schritt 2 verlangt das Servermodul 30 vom Abonnent 10 eine Abonnentenadresse (aln). Das kann z.B. die Anschlussnummer oder die Netzadresse sein, welche zur Verrechnung der Kosten für die Beanspruchung des Dienstes verwendet wird oder eine andere Abonnentenadresse. Das Servermodul 30 kann optional, z.B. durch Anschlusserkennung oder Netzwerkadressenerkennung, dem Abonnenten 10 eine Default-Abonnentenadresse vorschlagen. In Schritt 3 verlangt das Servermodul 30 vom Abonnenten 10 eine Zieladresse (sample), von welcher der Abonnent 10 weiss, dass er sie in letzter Zeit häufig benutzt hat. Bei graphischen Benutzerschnittstellen können Schritt 2 und 3 kombiniert werden. Beim Zugriff über Telefon wird der Abonnent 10 über einen IVR-Server 32 aufgefordert, die häufig gebrauchte Zieladresse, z.B. eine Telefonnummer oder eine IP-Nummer einzutippen. In Schritt 4 ruft das Servermodul 30 mit dem Datensatz "aln/sample" die API-Funktion (FUN.validate) auf, welche den Zugriff auf das Abonnentenadressenmodul 43 erlaubt. Die Authentifizierungseinheit 40 überprüft, ob der Datensatz "aln/sample" in der Datenbank 42 vorhanden ist (Schritt 5). Kann der Datensatz nicht gefunden werden, handelt es sich um keinen autorisierten Abonnenten 10 undloder eine der Zieladressen wurde vom Abonnenten 10 falsch eingegeben (Schritt 6). Der Prozess kann in diesem Fall z.B. bei Schritt 2 oder Schritt 3 fortfahren, indem das Servermodul 30 den Abonnenten 10 auffordert, nochmals die Zieladresse(n) einzugeben. Wird der Datensatz gefunden, erhält das Servermodul 30 die Nachricht, dass der Abonnent 10 authentifiziert wurde und das Servermodul 30, z.B. der Provider, kann dem Abonnenten den Zugriff auf den Dienst freigeben (Schritt 7).

Figur 3 illustiert mittels eines Flussdiagramms ein zweites Ausführungsbeispiel, bei welchem das Auswahllistenmodul 44 (Figur 1) verwendet wird. Es eignet sich insbesondere für ein Web-Interface, kann aber auch bei anderen Benutzerschnittstellen verwendet werden. Schritt 1 und 2 sind analog wie bei Figur 2. In Schritt 3 ruft das Servermodul 30 mit der Abonnentenadresse (aln) die API-Funktion (FUN.sample) auf, welche den Zugriff auf das Auswahllistenmodul 44 erlaubt. Die Authentifizierungseinheit 40 überprüft in Schritt 4, ob ein Datensatz für diese Abonnentenadresse vorhanden ist Ist kein Datensatz vorhanden, kann z.B. das Servermodul 30 den Abonnenten 10 mit Schritt 2 zur nochmaligen Eingabe einer Abonnentenadresse auffordern. Wird für diese Abonnentenadresse ein Datensatz gefunden, generiert in Schritt 5 die Authentifizierungseinheit 40 eine Liste mit mindestens einer beliebigen Zieladresse und mindestens einer häufig gewählten Zieladresse für die Abonnentenadresse und gibt diese Liste an das Servermodul 30 zurück. In Schritt 6 fordert das Servermodul 30 den Abonnenten 10 auf, aus der Liste die häufig gewählte Zieladresse (sample) auszuwählen. In Schritt 7 ruft das Servermodul 30 mit dem Datensatz "aln/sample" die API-Funktion (FUN.validate) auf, welche den Zugriff auf das Abonnentenadressenmodul 43 erlaubt. Die Authentifizierungseinheit 40 überprüft, ob der Datensatz "aln/sample" in der Datenbank 42 vorhanden ist (Schritt 8). Kann der Datensatz nicht gefunden werden, handelt es sich um keinen autorisierten Abonnenten 10 und/oder eine der Zieladressen wurde vom Abonnenten 10 falsch eingegeben (Schritt 9). Der Prozess kann z.B. bei Schritt 3 nochmals beginnen, indem das Servermodul 30 sich eine neue Auswahlliste generieren lässt. Wird der Datensatz gefunden, erhält das Servermodul 30 die Nachricht, dass der Abonnent 10 authentifiziert wurde und das Servermodul 30, z.B. der Provider, kann dem Abonnent 10 den Zugriff auf den Dienst freigeben (Schritt 10).

## Patentansprüche

1. Verfahren zur Authentifikation eines Abonnenten (10) eines Telekommunikationsnetzes, **dadurch gekennzeichnet,**
**dass** in einer Datenbank (42) eines Authentifikationssystems (20) basierend auf dem Telefonverkehr des Abonnenten (10) über eine Abonnentenadresse des Telekommunikationsnetzes häufig gewählte Zieladressen der Abonnentenadresse zugeordnet abgespeichert werden,
**dass** der Abonnent (10) mindestens eine der über die Abonnentenadresse häufig gewählten Zieladresse einem Servermodul des Authentifikationssystems (20) angibt,
**dass** eine Autentifizierungseinheit des Authentifikationssystems (20) die angegebene Zieladresse mit häufig gewählten Zieladressen vergleicht, die der Abonnentenadresse zugeordnet abgespeichert sind, und
**dass**, falls die angegebene Zieladresse sich unter den abgespeicherten, häufig gewählten Zieladressen befindet, der Abonnent durch das Authentifikationssystem (20) authentifiziert wird.

2. Verfahren nach Anspwch 1, **dadurch gekennzeichnet, dass** vom Servermodul (30) oder vom Abonnenten (10) zusätzlich ein Zeitintervall angegeben wird, in welchem unter einer Abonnentenadresse eine Zieladresse häufig gewählt wurde.

3. Verfahren nach einem der Ansprüche 1 oder 2, **dadurch gekennzeichnet, dass** der Abonnent (10) ein Benutzer eines Telefonnetzes ist, welcher mindestens eine der über eine Anschlussnummer des Telefonnetzes häufig gewählten Telefonnummern einem Authentifikationssystem (20) angibt und dass das Authentifikationssystem (20) die angegebene Telefonnummer mit häufig gewählten Telefonnummern vergleicht, die der Anschlussnummer zugeordnet abgespeichert sind.

4. Verfahren nach einem der Ansprüche 1 oder 2, **dadurch gekennzeichnet, dass** der Abonnent (10) ein Benutzer eines IP-Netzes ist, welcher mindestens eine der über eine IP-Adresse des Abonnenten des IP-Netzes häufig gewählten IP-Nummern einem Authentifikationssystem (20) angibt und dass das Authentifikationssystem (20) die angegebene IP-Nummer mit häufig gewählten IP-Nummern vergleicht, die der IP-Adresse des Abonnenten zugeordnet abgespeichert sind.

5. Verfahren nach einem der Ansprüche 1 bis 4, **dadurch gekennzeichnet, dass** der Abonnent eines Telekommunikationsnetzes (10) durch das Authentifikationssystem (20) über eine IVR-Schnittstelle (32) aufgefordert wird, eine häufig gewählte Zieladresse anzugeben.

6. Verfahren nach einem der Ansprüche 1 bis 4, **dadurch gekennzeichnet, dass** der Abonnent eines Telekommunikationsnetzes (10) die häufig gewählte Zieladresse dem Authentifikationssystem (20) über ein Web-Interface des Internets angibt.

7. Verfahren nach einem der Ansprüche 1 bis 6, **dadurch gekennzeichnet, dass** das Authentifikationssystem (20) eine Liste mit mindestens einer der gespeicherten, häufig gewählten Zieladressen und mit mindestens einer beliebigen anderen Zieladresse generiert, und dass der Benutzer (10) aus dieser Liste eine Zieladresse als häufig gewählte Zieladresse angibt.

8. Verfahren nach einem der Ansprüche 1 bis 7, **dadurch gekennzeichnet, dass** der Abonnent eines Telekommunikationsnetzes (10) seine Angaben mittels gesprochener Sprache über ein Kommunikationsendgerät eingibt.

9. System zur Authentifikation von Abonnenten (10) eines Telekommunikationsnetzes, **dadurch gekennzeichnet,**
**dass** das System eine Datenbank (42) umfasst, mittels welcher basierend auf dem Telefonverkehr des Abonnenten (10) über eine Abonnentenadresse des Telekommunikationsnetzes häufig gewählte Zieladressen der Abonnentenadresse zugeordnet abspeicherbar sind,
**dass** das System ein Servermodul (30) umfasst, welches derart ausgebildet ist, vom Benutzer eines Telekommunikationsnetzes mindestens eine der über eine Abonnentenadresse des Telekommunikationsnetzes häufig gewählten Zieladressen zu verlangen, und
**dass** das System eine Authentifizierungseinheit (40) umfasst, welche derart ausgebildet ist, die angegebene Zieladresse zur Authentifikation mit den häufig gewählten Zieladressen zu vergleichen, die der Abonnentenadresse zugeordnet sind, und, falls die angegebene Zieladresse sich unter den abgespeicherten, häufig gewählten Zieladressen befindet, den Abonnenten bei gefundener Zieladresse zu authentifizieren.

10. System zur Authentifikation nach Anspruch 9, **dadurch gekennzeichnet, dass** das System ein Modul zur Erfassung eines, vom Servermodul oder vom Abonnenten zusätzlich angegebenen, Zeitintervalls umfasst, wobei unter dem Zeitintervall über einer Abonnentenadresse häufig gewählte Zieladressen abspeicherbar sind.

11. System zur Authentifikation nach einem der Ansprüche 9 oder 10, **dadurch gekennzeichnet, dass** der Abonnent (10) ein Benutzer eines Telefonnetzes ist, dass die Abonnentenadresse eine Anschlussnummer dieses Telefonnetzes ist und dass die häufig gewählten Zieladressen häufig gewählte Telefonnummern sind.

12. System zur Authentifikation nach einem der Ansprüche 9 oder 10, **dadurch gekennzeichnet, dass** der Abonnent (10) ein Benutzer eines IP-Netzes ist, dass die Abonnentenadresse eine IP-Nummer ist und dass die häufig gewählten Zieladressen häufig gewählte IP-Nummern sind.

13. System zur Authentifikation nach einem der Ansprüche 9 bis 12, **dadurch gekennzeichnet, dass** das Servermodul (30) einen IVR-Server (32) umfasst, welcher derart ausgebildet ist, vom Benutzer die Abonnentenadresse und die häufig gewählte Zieladresse anzufordern und entgegenzunehmen.

14. System zur Authentifikation nach einem der Ansprüche 9 bis 13, **dadurch gekennzeichnet, dass** das Servermodul (30) einen Web-Server (31) umfasst, welcher derart ausgebildet ist, vom Benutzer die Abonnentenadresse und die häufig gewählte Zieladresse über ein Web-Interface anzufordern und entgegenzunehmen.

15. System zur Authentifikation nach einem der Ansprüche 9 bis 14, **dadurch gekennzeichnet, dass** die Authentirizierungseinheit (40) ein Auswahllistenmodul (44) umfasst, welches derart ausgebildet ist, eine Liste mit mindestens einer der gespeicherten, häufig gewählten Zieladressen und mit mindestens einer beliebigen anderen Zieladresse zu generieren, aus welcher Liste der Benutzer (10) eine Zieladresse als häufig gewählte Zieladresse angibt.

16. System zur Authentifikation nach einem der Ansprüche 9 bis 15, **dadurch gekennzeichnet, dass** das Servermodul (30) eine Benutzerschnittstelle umfasst, welche derart ausgebildet ist, die Angaben des Benutzers in gesprochener Sprache entgegenzunehmen.

## Claims

1. Method of authentication of a subscriber (10) of a telecommunication network, **characterised**
**in that**, based on the telephone traffic of the subscriber (10), destination addresses frequently dialled via a subscriber address of the telecommunication network are stored, assigned to the subscriber address, in a database (42) of an authentication system (20),
**in that** the subscriber (10) indicates to a server module of the authentication system (20) at least one of the destination addresses frequently dialled via the subscriber address,
**in that** an authentication unit of the authentication system (20) compares the indicated destination address with frequently dialled destination addresses which are stored assigned to the subscriber address, and
**in that**, if the indicated destination address is among the stored, frequently dialled destination addresses, the subscriber is authenticated by the authentication system (20).

2. Method according to claim 1, **characterised in that** a time interval during which a destination address has been frequently dialled under a subscriber address is additionally indicated by the server module (30) or by the subscriber (10).

3. Method according to one of the claims 1 or 2, **characterised in that** the subscriber (10) is a user of a telephone network who indicates to an authentication system (20) at least one of the telephone numbers frequently dialled via a terminal number of the telephone network, and **in that** the authentication system (20) compares the indicated telephone number with frequently dialled telephone numbers which are stored assigned to the terminal number.

4. Method according to one of the claims 1 or 2, **characterised in that** the subscriber (10) is a user of an IP network, who indicates to an authentication system (20) at least one of the IP numbers frequently dialled via an IP address of the subscriber of the IP network, and **in that** the authentication system (20) compares the indicated IP number with frequently dialled IP numbers which are stored assigned to the IP address of the subscriber.

5. Method according to one of the claims 1 to 4, **characterised in that** the subscriber of a telecommunication network (10) is requested by the authentication system (20), via an IVR interface (32), to indicate a frequently dialled destination address.

6. Method according to one of the claims 1 to 4, **characterised in that** the subscriber of a telecommunication network (10) indicates to the authentication system (20) via a web interface of the Internet the frequently dialled destination address.

7. Method according to one of the claims 1 to 6, **characterised in that** the authentication system (20) generates a list with at least one of the stored, frequently dialled destination addresses and with at least one arbitrary other destination address, and **in that** the user (10) indicates a destination address from this list as a frequently dialled destination address.

8. Method according to one of the claims 1 to 7, **characterised in that** the subscriber of a telecommunication network (10) enters his data by means of spoken language via a communication terminal.

9. System for authentication of subscribers (10) of a telecommunication network, **characterised**
**in that** the system comprises a database (42) by means of which, based on the telephone traffic of the subscriber (10), destination addresses frequently dialled via a subscriber address of the telecommunication network are storable assigned to the subscriber address,
**in that** the system comprises a server module (30) which is designed so as to request from the user of a telecommunication network at least one of the destination addresses frequently dialled via a subscriber address of the telecommunication network, and
**in that** the system comprises an authentication unit (40), which is designed so as to compare the indicated destination address for authentication with the frequently dialled destination addresses which are assigned to the subscriber address, and, if the indicated destination address is among the stored, frequently dialled destination addresses, to authenticate the subscriber with found destination address.

10. System for authentication according to claim 9, **characterised in that** the system comprises a module for capturing a time interval, additionally indicated by the server module or by the subscriber, whereby destination addresses frequently dialled via a subscriber address during the time interval are storable.

11. System for authentication according to one of the claims 9 or 10, **characterised in that** the subscriber (10) is a user of a telephone network, **in that** the subscriber address is a terminal number of this telephone network, and **in that** the frequently dialled destination addresses are frequently dialled telephone numbers.

12. System for authentication according to one of the claims 9 or 10, **characterised in that** the subscriber (10) is a user of an IP network, **in that** the subscriber address is an IP number, and **in that** the frequently dialled destination addresses are frequently dialled IP numbers.

13. System for authentication according to one of the claims 9 to 12, **characterised in that** the server module (30) comprises an IVR server (32), which is designed so as to request and receive from the user the subscriber address and the frequently dialled destination address.

14. System for authentication according to one of the claims 9 to 13, **characterised in that** the server module (30) comprises a web server (31), which is designed so as to request and receive from the user the subscriber address and the frequently dialled destination address via a web interface.

15. System for authentication according to one of the claims 9 to 14, **characterised in that** the authentication unit (40) comprises a selection list module (44), which is designed so as to generate a list with at least one of the stored, frequently dialled destination addresses and with at least one arbitrary other destination address, from which list the user (10) indicates a destination address as the frequently dialled destination address.

16. System for authentication according to one of the claims 9 to 15, **characterised in that** the server module (30) comprises a user interface, which is designed so as to receive the indications of the user in spoken language.

## Revendications

1. Procédé pour l'authentification d'un abonnés (10) d'un réseau de télécommunication, **caractérisé en ce que**
des adresses cibles composées fréquemment par une adresse d'abonné du réseau de télécommunication sont mémorisées par association dans une banque de données (42) d'un système d'authentification (20) en se basant sur la trafic téléphonique de l'abonné (10),
**en ce que** l'abonné (10) indique au moins une adresse cible fréquemment composée par l'adresse d'abonné à un module de serveur du système d'authentification (20),
**en ce qu'**une unité d'authentification du système d'authentification compare l'adresse cible indiquée avec les adresses cibles fréquemment composées qui sont mémorisées et associées à l'adresse d'abonné et
**en ce qu'**au cas où l'adresse cible indiquée se trouve parmi les adresses cibles mémorisées et fréquemment composées, l'abonné est authentifié par le système d'authentification (20).

2. Procédé selon la revendication 1, **caractérisé en ce que** le module de serveur (30) ou l'abonné (10) indique en plus un intervalle de temps dans lequel une adresse cible est composée fréquemment sous une adresse d'abonné.

3. Procédé selon l'une des revendications 1 ou 2, **caractérisé en ce que** l'abonné (10) est un utilisateur d'un réseau téléphonique qui indique à un système d'authentification (20) au moins l'un des numéros de téléphone fréquemment composés par un numéro de ligne téléphonique du réseau téléphonique et **en ce que** le système d'authentification (20) compare le numéro de téléphone indiqué avec des numéros de téléphone fréquemment composés qui sont mémorisés et associés au numéro de ligne d'abonné.

4. Procédé selon l'une des revendications 1 ou 2, **caractérisé en ce que** l'abonné (10) est un utilisateur d'un réseau IP (Internet Protocol) qui indique au moins l'un des numéros IP fréquemment composés par l'intermédiaire d'une adresse IP de l'abonnement du réseau IP à un système d'authentification et **en ce que** le système d'authentification (20) compare le numéro IP indiqué avec les numéros IP fréquemment composés qui sont mémorisés et associés à l'adresse IP de l'abonné.

5. Procédé selon l'une des revendications 1 à 4, **caractérisé en ce que** l'abonné d'un réseau de télécommunication (10) est invité par le système d'authentification (20) par l'intermédiaire d'une interface RVI (32) (Réponse Vocale Interactive) à indiquer une adresse cible fréquemment composée.

6. Procédé selon l'une des revendications 1 à 4, **caractérisé en ce que** l'abonné d'un réseau de télécommunication (10) indique au système d'authentification (20) par une interface WEB sur Internet, l'adresse cible fréquemment composée.

7. Procédé selon l'une des revendications 1 à 6, **caractérisé en ce que** le système d'authentification (20) génère une liste avec au moins l'une des adresses cibles mémorisées et fréquemment composées et avec au moins n'importe quelle autre adresse cible et **en ce que** l'utilisateur (10) indique une adresse cible figurant sur cette liste comme adresse cible fréquemment sélectionnée.

8. Procédé selon l'une des revendications 1 à 7, **caractérisé en ce que** l'abonné d'un réseau de télécommunication (10) entre des données par la voix au moyen d'un terminal de communication.

9. Système pour l'authentification d'abonnées (10) d'un réseau de télécommunication, **caractérisé en ce que**
le système comprend une banque de données (42) au moyen de laquelle des adresses cibles fréquemment composées par l'intermédiaire d'une adresse d'abonné du réseau de télécommunication peuvent être stockées et associées à l'adresse d'abonné sur la base du trafic téléphonique de l'abonné (10),
**en ce que** le système comprend un module de serveur (30) qui est configuré de manière à exiger de l'utilisateur d'un réseau de télécommunication au moins l'une des adresses cibles fréquemment composées par l'intermédiaire d'une adresse d'abonné du réseau de télécommunication et
**en ce que** le système comprend une unité d'authentification (40) qui est configurée de manière à comparer l'adresse cible indiquée pour l'authentification avec les adresses cibles fréquemment composées qui sont associées à l'adresse de l'abonné et, au cas où l'adresse cible indiquée se trouve parmi les adresses mémorisées fréquemment composées, à authentifier l'abonné si l'adresse cible est trouvée.

10. Système d'authentification selon la revendication 9, **caractérisé en ce que** le système comprend un module pour la saisie d'un intervalle temps indiqué en supplément par le module de serveur ou par l'abonné, des adresses cibles fréquemment composées par l'intermédiaire d'une adresse d'abonné étant mémorisables dans l'intervalle de temps.

11. Système d'authentification selon l'une des revendications 9 ou 10, **caractérisé en ce que** l'abonné (10) est un utilisateur d'un réseau téléphonique, **en ce que** l'adresse d'abonné est un numéro de ligne téléphonique de ce réseau téléphonique et **en ce que** les adresses cibles fréquemment composées sont des numéros de téléphone fréquemment composés.

12. Système d'authentification selon l'une des revendications 9 ou 10, **caractérisé en ce que** l'abonné (10) est un utilisateur d'un réseau IP, **en ce que** l'adresse d'abonné est un numéro IP et **en ce que** les adresses cibles fréquemment composées sont des numéros IP fréquemment composés.

13. Système d'authentification selon l'une des revendications 9 à 12, **caractérisé en ce que** le module de serveur (30) comprend un serveur RVI (32) qui est configuré de manière à exiger et à recevoir de l'utilisateur l'adresse d'abonné et l'adresse fréquemment composée.

14. Système d'authentification selon l'une des revendications 9 à 12, **caractérisé en ce que** le module de serveur (30) comprend un serveur Web qui est configuré de manière à exiger et à recevoir de l'utilisateur l'adresse d'abonné et l'adresse fréquemment composée par l'intermédiaire d'une Interface Web.

15. Système d'authentification selon l'une des revendications 9 à 14, **caractérisé en ce que** l'unité d'authentification (40) comprend un module de listes de sélection (44) qui est configuré de manière à générer une liste avec au moins l'une des adresses cibles mémorisées fréquemment composées et avec au moins n'importe quelle autre adresse cible, liste à partir de laquelle l'utilisateur (10) indique une adresse cible comme adresse cible fréquemment composée.

16. Système d'authentification selon l'une des revendications 9 à 15, **caractérisé en ce que** le module de serveur (30) comprend une interface d'utilisateur qui est configurée de manière à receuillir les données de l'utilisateur par la voix.
